# EUROPÄISCHE PATENTSCHRIFT

(11) **EP 1 090 528 B1**
(45) Veröffentlichungstag und Bekanntmachung des Hinweises auf die Patenterteilung: **15.09.2004**
(21) Anmeldenummer: 99939938.9
(22) Anmeldetag: 23.06.1999
(51) Int. Cl.: H04Q 7/38

(54) **VERFAHREN ZUM STEUERN DES WEITERREICHENS VON TELEKOMMUNIKATIONSVERBINDUNGEN ZWISCHEN MOBILTEILEN UND BASISSTATIONEN IN ZELLULAREN TELEKOMMUNIKATIONSSYSTEMEN MIT DRAHTLOSER TELEKOMMUNIKATION**
METHOD FOR CONTROLLING THE HANDOVER OF TELECOMMUNICATION CONNECTIONS BETWEEN MOBILE PARTS AND BASE STATIONS IN CELLULAR TELECOMMUNICATIONS SYSTEMS HAVING WIRELESS TELECOMMUNICATION
PROCEDE POUR LA COMMANDE DE LA RETRANSMISSION DE TELECOMMUNICATIONS ENTRE DES PARTIES MOBILES ET DES STATIONS DE BASE DANS DES SYSTEMES DE TELECOMMUNICATION CELLULAIRES SANS FIL

(30) Priorität: 23.06.1998 DE 19827919
(43) Veröffentlichungstag der Anmeldung: 11.04.2001
(73) Patentinhaber: SIEMENS AKTIENGESELLSCHAFT, 80333 München (DE)
(72) Erfinder: BOLINTH, Edgar, D-41189 Mönchengladbach (DE); KAMPERSCHROER, Erich, D-46499 Hamminkeln (DE); ULRICH, Thomas, D-67098 Dürkheim (DE); FÄRBER, Michael, D-82515 Wolfratshausen (DE); SCHWARK, Uwe, D-46399 Bocholt (DE); KLEIN, Anja, D-10709 Berlin (DE); SITTE, Armin, D-10405 Berlin (DE); KOTTKAMP, Meik, D-81369 München (DE); BENZ, Michael, D-13629 Berlin (DE)
(86) Internationale Anmeldenummer: PCT/DE1999/001830
(87) Internationale Veröffentlichungsnummer: WO 1999/067967

(56) Entgegenhaltungen:
- EP-A- 0 888 026
- WO-A-96/10305
- WO-A-97/32445
- WO-A-98/25431
- US-A- 5 640 677
- US-A- 5 724 665

## Beschreibung

Telekommunikationssysteme mit drahtloser Telekommunikation zwischen mobilen und/oder stationären Sende-/Empfangsgeräten sind spezielle Nachrichtensysteme mit einer Nachrichtenübertragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren zur Mehrfachausnutzung der Nachrichtenübertragungsstrecke FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie **DECT** [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*], **GSM** [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P.Smolka "GSM-Funkschnittstelle - Elemente und Funktionen",* **UMTS** [**U**niversal **M**obile **T**elecommunication **S**ystem; vgl. **(1):** *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration";* **(2):** *Nachrichtentechnik Elektronik, Berlin 41, 1991, Heft 6, Seiten 223 bis 227 und Seite 234; P.W.Baier, P.Jung, A.Klein: "CDMA - ein günstiges Vielfachzugriffsverfahren für frequenzselektive und zeitvariante Mobilfunkkanäle"*; **(3):** *IEICE Transactions on Fundamentals of Electonics, Communications and Computer Sciences, Vol. E79-A, No. 12, December 1996, Seiten 1930 bis 1937; P.W.Baier, P. Jung: "CDMA Myths and Realities Revisited"*; **(4)**: *IEEE Personal Communications, February 1995, Seiten 38 bis 47; A.Urie, M.Streeton, C.Mourot: "An Advanced TDMA Mobile Access System for UMTS";* **(5):** *telekom praxis, 5*/*1995, Seiten 9 bis 14; P.W.Baier: "Spread-Spectrum-Technik* und *CDMA - eine ursprünglich militärische Technik erobert den zivilen Bereich"*; **(6):** *IEEE Personal Communications, February 1995, Seiten 48 bis 53; P.G.Andermo, L.M.Ewerbring: "An CDMA-Based Radio Access Design for UMTS";* **(7):** *ITG Fachberichte 124 (1993), Berlin, Offenbach: VDE Verlag ISBN 3-8007-1965-7, Seiten 67 bis 75; Dr. T.Zimmermann, Siemens AG: "Anwendung von CDMA in der Mobilkommunikation";* **(8):** *telcom report 16, (1993), Heft 1, Seiten 38 bis 41; Dr. T. Ketseoglou, Siemens AG und Dr. T.Zimmermann, Siemens AG: "Effizienter Teilnehmer-Zugriff für die 3. Generation der Mobilkommunikation - Vielfachzugriffsverfahren CDMA macht Luftschnittstelle flexibler"*; **(9):** *Funkschau 6*/*98: R.Sietmann "Ringen um die UMTS-Schnlttstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"]
   erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

In den Telekommunikationssystemen des vorstehend angegebenen Typs ist die Weitergabe bzw. das Weiterreichen eines laufenden Gesprächs bzw. einer Verbindung, ein sogenanntes "Handover" oder "Handoff", ein sehr zeitkritischer Vorgang, da die Kontinuität laufender Verbindungen gewährleistet sein muß. Insbesondere in Telekommunikationssystemen mit drahtloser Telekommunikation treten diverse Situationen bzw. Fälle auf, in denen ein "Handover" bzw. ein "Handoff" möglich oder sogar notwendig ist. Entsprechend dieser Situationen unterscheidet man z.B. zwischen einem "Intracell-Handover", einem "Intercell-Handover", einem "External Handover" etc.

Für das Durchführen eines "Handover" benötigt z.B. ein mobiles Sende-/Empfangsgerät, z.B. eine Mobilstation bzw. ein Mobilteil, das eine Verbindung zu einem stationären Sende/Empfangsgerät, z.B. eine Basisstation bzw. ein Festteil, in einer Zelle unterhält zellenspezifische Informationen der benachbarten Zelle bzw. von mehreren benachbarten Zellen. Das Verfahren, mit welchem diese Informationen empfangen werden, bezeichnet man als "Monitoring", d. h. es wird von der Mobilstation z.B. ein Steuerungskanal, der sogenannte Broadcast Control CHannel (BCCH) abgehört, auf welchem die oben genannten zellenspezifischen Informationen von der Basisstation "gebroadcastet" werden.

Ein Problem besteht darin, wie kommt die Mobilstation zu den benötigten zellenspezifischen Informationen und zu dem aktuellen Parameter, d. h. Frequenz, Zeitschlitz, Code der Nachbarbasisstation, zu der die Verbindung mit der "Handover"-Prozedur überführt werden soll bzw. wohin der Handover gemacht werden soll, wenn die Mobilstation in einem unkoordinierten unlizensierten Szenario - wie z.B. in einer gehäuften Anordnung unsychronisierter Residential-Basisstationen - oder in einem rein koordinierten lizensierten zellularen Szenario - wie z.B. in einem TDD-UMTS-System - infolge einer hohen Datenrate fast alle physikalischen Kanäle mit Datenverkehr belegt und daher der "Broadcast Control CHannel" der benachbarten Basisstationen nicht empfangen werden kann.

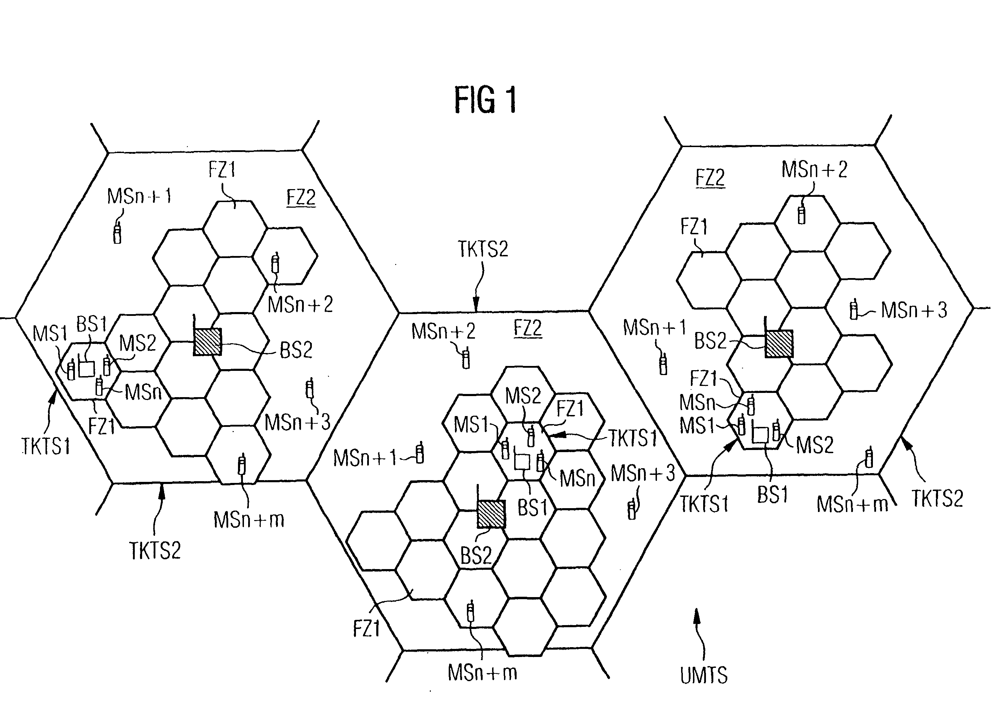

FIGUR 1 zeigt ein mögliches UMTS-Szenario (Universal Mobile Telecommunication System) mit einem multi-zellularen sowohl im unkoordinierten unlizensierten als auch im koordinierten lizensierten Systembetrieb arbeitenden Universal-Mobil-Telekommunikation-System UMTS, das die beiden vorstehend angegebenen Szenarien beinhaltet. Das dargestellte UMTS-System weist ein in ersten Funkzellen FZ1 wirkendes erstes Telekommunikationsteilsystem TKTS1 mit drahtloser Telekommunikation zwischen einer als Indoor-Basisstation ausgebildeten ersten Basisstation BS1 und mit n (n∈N) vorzugsweise als Indoor/Outdoor-Mobilstationen ausgebildeten ersten Mobilstationen MS1...MSn auf, das im unkoordiniertem unlizensiertem Systembetrieb arbeitet. Außerdem weist das UMTS-System ein in zweiten Funkzellen FZ2 wirkendes zweites Telekommunikationsteilsystem TKST2 mit drahtloser Telekommunikation zwischen einer als Outdoor-Basisstation ausgebildeten zweiten Basisstation BS2 und mit m (m∈N) vorzugsweise als Indoor-/Outdoor-Mobilstationen ausgebildeten zweiten Mobilstationen MSn+1...MSn+m auf, das im koordiniertem lizensiertem Systembetrieb arbeitet.

Ein weiteres Problem besteht darin, wie das "Monitoring" für einen "Handover" vom unkoordinierten unlizensierten Systembetrieb zum koordinierten lizensierten Systembetrieb aussehen muß.

Bei dem bekannten GSM-Szenario wird ein "mobile assisted Handover" durchgeführt. Das "Monitoring" wird dabei von der Mobilstation während der freien Zeitschlitze durchgeführt, d. h. die Mobilstation empfängt selbständig die Broadcast Control CHannels der benachbarten Basisstationen, wählt diejenige Basisstation mit der besten Empfangsqualität aus und teilt dies der eigenen Basisstation mit. Der "Handover" wird dabei von der Mobilstation initiiert und von der Basisstation gesteuert; man spricht deshalb von auch von einem "mobile assisted Handover". Von entscheidender Bedeutung ist hierbei die Tatsache, daß die Mobilstation auf seinem aktiven Broadcast Control CHannel bereits Vorabinformationen vom Netzbetreiber erhält, auf welchen Frequenzen die Broadcast Control CHannels der benachbarten Basisstationen zu suchen sind.

Bei dem bekannten DECT-Szenario wird im Unterschied zum GSM-Szenario ein "mobile initiated and mobile controlled Handover" durchgeführt. Das "Monitoring" wird hier von der Mobilstation durchgeführt, der Handover wird ebenfalls von der Mobilstation gesteuert. Die Mobilstation besitzt dabei keine Vorabinformationen, auf welchen Kanälen - d. h. auf welchen Frequenzen/Zeitschlitzen - beim "Monitoring" nach den "Broadcast Control CHannels" der Nachbarzellew gesucht werden muß. Die "Broadcast Control CHannels" entsprechen nach der DECT-Terminologie den Kanälen, in denen die "Dummy Bearer"-Informationen gesendet werden.

Beim derzeit zu standardisierenden zellularen UMTS-Szenario ist, wie bei dem GSM-Szenario, ebenfalls ein "mobile assisted Handover" geplant. Das "Monitoring" wird vom Mobilteil durchgeführt, der "Handover" wird von der Mobilstation initiiert und von der Basisstation gesteuert. Eine Vorabinformation seitens des Netzbetreibers, auf welchen Kanälen (hier sind es im wesentlichen die Codes, da ein "Frequency reuse" von 1 gilt) ist auch hier mit hoher Wahrscheinlichkeit notwendig.

In allen vorstehend genannten Szenarien wird das "Monitoring" mittels Mobilstation durchgeführt.

Das Problem des Initial-Monitoring (Information über Kanäle, auf denen der "Broadcast Control CHannel" der Nachbarzellen empfangen werden kann) ist bisher im zellularen Bereich mittels von dem Netzbetreiber vorgeleistete für die jeweilige Mobilstation bestimmte Vorabinformationen gelöst worden, die durch die aktive Basisstation mittels Broadcast Control Channel zu der betreffenden Mobilstation übertragen worden sind. Lediglich das DECT-Szenario bildet eine Ausnahme, da hier auf ein Initial-Monitoring für den koordinierten lizensierten Betrieb verzichtet wird. Es ist daher erforderlich, daß die Mobilstation im zellularen DECT-Betrieb ständig benachbarte Frequenzen hinsichtlich Broadcast Control CHannel für ein "Intercell-Handover" durchscannt. Dies ist aber im Hinblick auf "Stand By"-Zeiten, asymmetrische Datendienste (Allokierung mehrerer Zeitschlitze) keine optimale Lösung. Im unkoordinierten DECT-Betrieb ist lediglich ein Intracell Handover möglich, so daß das Initial-Monitoring nicht notwendig ist.

Ein Handover vom unkoordinierten unlizensierten Systembetrieb zum koordinierten lizensierten Systembetrieb (z. B. residential TDD-UMTS-System zum public FDD-UMTS- oder public TDD-UMTS-System) gibt es bisher noch nicht.

Aus der WO 98/25431 ist ein Verfahren zur Steuerung der Kommunikation zwischen Basisstation und Mobilteilen in einem drahtlosen zellularen Telekommunikationssystem bekannt, bei dem einem Mobilteil zur Durchführung eines "Mobile Assisted Hand-Off (MAHO)" von einer Basisstation mittels von der Basisstation an das Mobilteil zu übertragende Steuerinformationen eine Liste übertragen wird, in der Angaben über zu der Basisstation benachbarte Basisstationen enthalten sind. Mit Hilfe dieser Liste führt das Mobilteil für das "Mobile Assisted Hand-Off (MAHO)" Signalfeldstärkemessungen von den Signalen durch, die es von den in der Liste aufgeführten Basisstationen empfängt.

Aus der nachveröffentlichten EP 0 888 026 A2 ist ein Verfahren zum Handover und zur Wiederauswahl von Zellen in einem zellularen Funksystem bekannt, bei dem eine Basisstation des Funksystems zur Übertragung von Informationen über benachbarte Zellen an Mobilstationen eine Nachricht generiert, in der Informationen über die benachbarten Zellen - so z.B. QoS-Informationen (Quality of Service) der benachbarten Zellen - enthalten sind und bei der diese Basisstation die generierte Nachricht an die jeweilige Mobilstation sendet. Auf der Basis dieser Nachricht führt die Mobilstation eine erste Auswahl von mehreren für die Funkübertragung vorteilhaften Zellen aus und führt unter diesen ausgewählten Zellen Messungen durch, um eine für die Funkübertragung geeignete neue Zelle zu finden.

Aus der US 5,724,665 ist eine an ein Telekommunikationsnetz, wie z.B. PSTN, POTS, ISDN etc., angeschlossene Schnurlos-Basisstation bekannt, deren Betrieb teilweise von gespeicherten Informationen benachbarter, ebenfalls an das Telekommunikationsnetz angeschlossener Schnurlos-Basisstationen - z.B. eine Liste von besetzten Frequenzen - abhängig ist. Die Schnurlos-Basisstation nutzt, um an diese Informationen zu gelangen, den für die Kommunikation zu Schnurlos-Mobilteilen verwendeten Vorwärts- und Rückwärtskanal. Zur Aktualisierung der gespeicherten Informationen bewertet die Schnurlos-Basisstation Feldstärkewerte von auf Kanälen gesendeten Steuersignalen zum Verbindungsaufbau in Bezug auf einen vorgegebenen Schwellwert, anhand derer die benachbarten Schnurlos-Basisstationen ermittelt, sortiert und in eine Liste eingetragen werden.

Die der Erfindung zugrundeliegende Aufgabe besteht darin, in einem zellularen Telekommunikationssystem mit drahtloser Telekommunikation zwischen Mobilteilen und Basisstationen das Weiterreichen von Telekommunikationsverbindungen aus einem unkoordinierten unlizensierten Betrieb des Telekommunikationssystems (residential operation bzw. private operation) in einen koordinierten lizensierten Betrieb des Telekommunikationssystems (public operation) oder einen unkoordinierten unlizensierten Betrieb des Telekommunikationssystems und umgekehrt bei geringem Energieverbrauch des Mobilteils und bei kleinem schaltungstechnischem Aufbau des Mobilteils vorzubereiten.

Diese Aufgabe wird durch Merkmale des Patentanspruches 1 gelöst.

Die der Erfindung zugrundeliegende Idee besteht darin, das eingangs erwähnte Problem des "Initial-Monitoring" in der den unkoordinierten unlizensierten Systembetrieb unterstützenden Basisstation (erste Basisstation) durchzuführen.

Dieses Verfahren bietet den Vorteil, daß die "Broadcast Control CHannel"-Suche durch die den unkoordinierten unlizensierten Systembetrieb unterstützende erste Basisstation, die a priori kein Wissen über die Verhältnisse in den benachbarten Zellen hat, von in den Nachbarzellen angeordneten Basisstationen lediglich einmal bei Einschalten des Gerätes und dann erst wieder in längeren periodischen Abständen durchführen zu müssen(vgl. Vorteilhafte Weiterbildung gemäß Anspruch 2). Diese Informationen werden dann (z. B. per Broadcast Control Channel) dem Mobilteil bzw. der Mobilstation mitgeteilt.

Die Vorteile für die Mobilstation sind grundsätzlich der geringere Stromverbrauch, die "Stand-By"-Zeit wird erhöht, das Initial-Monitoring wird von der ersten Basisstation durchgeführt sowie die geringere Komplexität im Fall von reinen Residential-Mobilstationen bzw. Indoor-Terminals (Komplexität wird in die erste Basisstation integriert).

Da die erste Basisstation erst durch das "Initial-Monitoring" zellspezifische Information über die benachbarten öffentlichen Zellen erhält (und inbesondere für UMTS ein hoher zeitaufwendiger Rechenprozeß notwendig ist, um ohne Vorabinformation zellspezifische Scramblingcodes zu detektieren), wird eine zu Indoor/Outdoor-Zwecken ausgebildete Dual Mode-Mobilstation erst in die Lage versetzt, einen insbesondere zeitkritischen "Handover" von Indoor zu Outdoor durchzuführen.

Bei den Weiterbildungen der Erfindung gemäß der Ansprüche 3 und 4 besteht die wesentliche Idee darin, das Monitoring in Outdoor- und Indoor-Basisstation durchzuführen. Diese Vorgehensweise bietet für den Anwendungsfall hoher asymmetrischer Datenraten (lediglich im TDD-Mode möglich) sowohl für einen "Indoor zu Outdoor"-Handover als auch für den "Intracell-Handover" Vorteile. So kann man das "Monitoring" in der ersten Basisstation dazu benutzen, einen asymmetrischen Service mit hoher Downlink-Datenrate und niedriger Uplink-Datenrate und umgekehrt sowie eine Interferenzmessung auf einer anderen Trägerfrequenz durchzuführen und gegebenenfalls die gesamte asymmetrische Verbindung auf die andere Trägerfrequenz zu verlegen (Interfrequency-Handover). Ein "Indoor zu Outdoor-Handover" bei Beibehaltung der hohen Datenrate wird ebenfalls möglich.

Wird die "Monitoring"-Funktionalität nicht nur in der Basisstation, sondern zusätzlich auch in die Mobilstation integriert, so kann auch ein asymmetrischer Service mit geringer Downlink-Datenrate und hoher Uplink-Datenrate von einer Trägerfrequenz auf einen Träger verlegt werden (Interfrequency-Handover). In diesem Fall kann das Monitoring nicht von der Basisstation übernommen werden, da hier auf nahezu allen Zeitschlitzen empfangen wird - das "Monitoring" wird in diesem Fall von der Mobilstation durchgeführt.

Ein Ausführungsbeispiel der Erfindung wird anhand der FIGUREN 2 bis 7 erläutert. Es zeigen:
FIGUR 2 ausgehend von dem UMTS-Szenario mit dem Ausschnitt aus einem Universal-Mobil-Telekommunikationsnetz und einem sowohl im unkoordinierten unlizensierten als auch im koordinierten lizensierten Systembetrieb arbeitenden Universal-Mobil-Telekommunikation-System in FIGUR 1 ein modifiziertes UMTS-Szenario mit Initial-Monitoring,

FIGUREN 3 bis 7 Zeitschlitzdarstellungen für das "Monitoring" der Basisstationen BS1, BS2 und der Mobilstationen MS1...MSn, MSn+1...MSn+m.

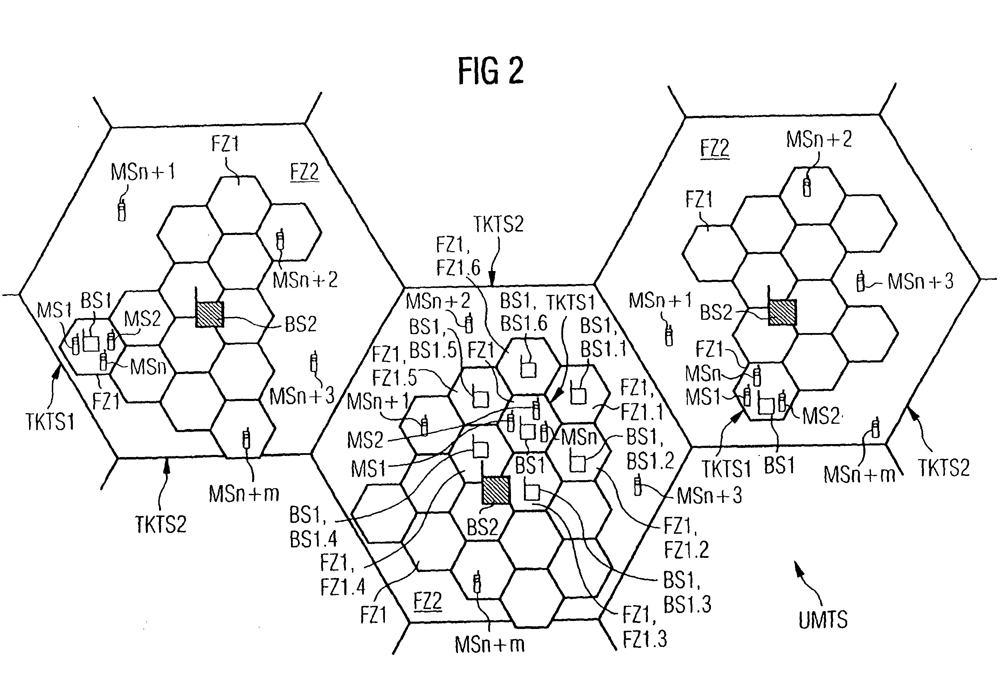

FIGUR 2 zeigt ein modifiziertes UMTS-Szenario mit Initial-Monitoring, das von dem in FIGUR 1 dargestellten UMTS-Szenario ausgeht. Bei dem modifizierten UMTS-Szenario befinden sich die erste Basisstation BS1 und die ersten Mobilstationen MS1...MSn - wie beim UMTS-Szenario in FIGUR 1 - in der ersten Funkzelle FZ1. Zu dieser ersten Basisstation BS1 benachbart - wobei z.B. eine Nachbarschaft per Definition dann vorliegt, wenn die zugehörigen Funkzellen, die erste Funkzelle FZ1 und die zweite Funkzelle FZ2, aneinandergrenzen oder sich überlappen - ist zum einen die zweite Basisstation BS2, die sich in der die erste Funkzelle FZ1 mit der ersten Basisstation BS1 völlig abdeckenden zweiten Funkzelle FZ2 befindet, und sind zum anderen weitere zwar als erste Basisstationen BS1 ausgebildete, aber wegen der Nachbarschaft zu der ersten Basisstation BS1 in der ersten Funkzelle FZ1 als weitere zweite Basisstationen BS2 bezeichnete zweite Basisstationen BS1.1...BS1.6, die in weitere unmittelbar an die erste Funkzelle FZ1 mit der ersten Basisstation BS1 angrenzende, zwar als erste Funkzelle FZ1 ausgebildete, aber wegen der Nachbarschaft zu der ersten Funkzelle FZ1 mit der ersten Basisstation BS1 als weitere zweite Funkzellen FZ2 bezeichnete zweite Funkzellen FZ1.1...F21.6 angeordnet sind.

Für das Initial-Monitoring empfängt die den unkoordinierten unlizensierten Systembetrieb unterstützende, der ersten Zelle FZ1 zugeordnete erste Basisstation BS1 in einem ersten Überwachungsmodus für das Weiterreichen von Telekommunikationsverbindungen relevante Nachrichten, die von mindestens einer der zu der ersten Basisstation BS1 benachbarten, den koordinierten lizensierten Systembetrieb oder den unkoordinierten unlizensierten Systembetrieb unterstützenden, jeweils der zweiten Zelle FZ2, FZ1.1...FZ1.6 zugeordneten zweiten Basisstation BS2, BS1.1...BS1.6 jeweils auf einem als "Broadcast Control CHannel BCCH" ausgebildeten ersten Telekommunikationskanal gesendet werden.

Danach bewertet die erste Basisstation BS1 die empfangenen Nachrichten bezüglich Informationsgehalt und Empfangsqualität und überträgt eine nach Empfangsqualität geordnete Liste von für die Übergabe der Telekommunikationsverbindung notwendigen Parametern, die jeweils einer der zweiten Basisstationen BS2, BS1.1...BS1.6 zuzuordnen sind, auf einem als "Broadcast Control CHannel BCCH" ausgebildeten zweiten Telekommunikationskanal an die sich in der ersten Zelle FZ1 aufhaltenden erste Mobilstationen MS1...MSn.

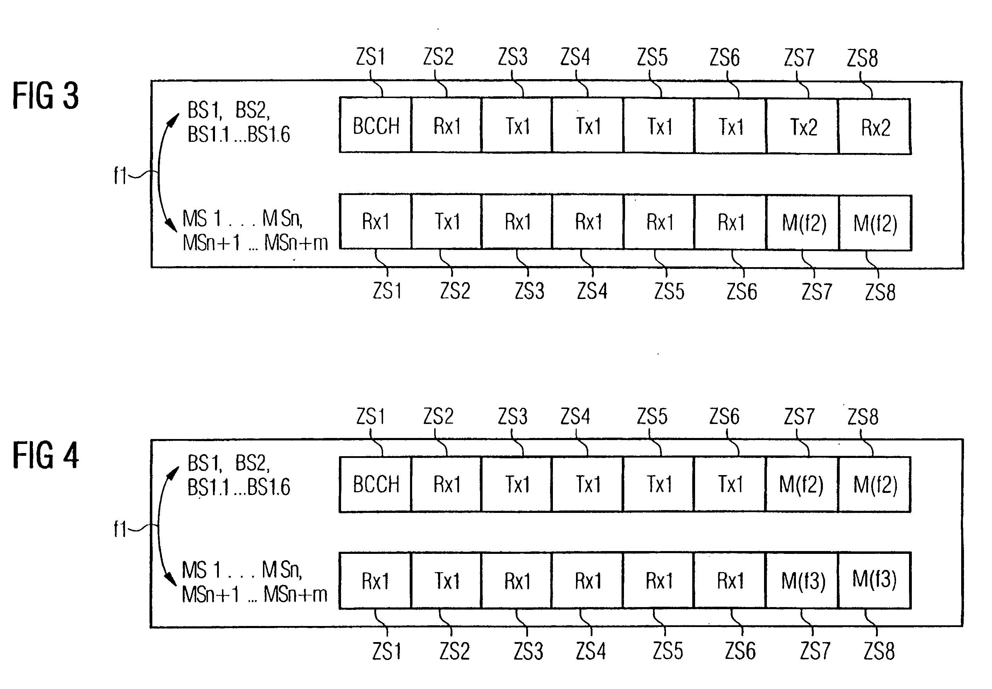

Die FIGUREN 3 bis 7 zeigen jeweils anhand einer Zeitschlitzdarstellung mit acht Zeitschlitzen ZS1...ZS8 das "Monitoring"-Szenario für die Basisstationen BS1, BS2, BS1.1...BS1.6 und die Mobilstationen MS1...MSn, MSn+1...MSn+m. Allen FIGUREN 3 bis 7 ist gemeinsam, daß die Basisstation BS1, BS2, BS1.1...BS1.6 einem ersten Zeitschlitz ZS1 als "Broadcast Control CHannel BCCH" nutzt und daß zwischen der Basisstation BS1, BS2, BS1.1...BS1.6 und der Mobilstation MS1...MSn, MSn+1...MSn+m auf einer ersten Frequenz f1 jeweils eine bidirektionale asymmetrische Datenverbindung mit jeweils mehreren Empfangszeitschlitzen Rx1 und Sendezeitschlitzen Tx1 besteht, die sich jeweils zumindest über die Zeitschlitze ZS2...ZS6 erstreckt. Darüber hinaus wird z.B. jeweils mit den Ausdrükken M(f2), M(f3) angegeben, daß die Basisstation BS1, BS2, BS1.1...BS1.6 und/oder die Mobilstation MS1...MSn, MSn+1...MSn+m auf einer zweiten Frequenz f2 oder auf einer dritten Frequenz f3 ein "Monitoring" M durchführt.

Die genannten FIGUREN zeigen im Einzelnen folgendes:

FIGUR 3 zeigt, daß die Mobilstation MS1...MSn, MSn+1...MSn+m in den Zeitschlitzen ZS1...ZS6 mit der Basisstation BS1, BS2, BS1.1...BS1.6 eine bidirektionale asymmetrische Datenverbindung mit den Empfangszeitschlitzen Rx1 und Sendezeitschlitzen Tx1 unterhält, daß die Basisstation BS1, BS2, BS1.1...BS1.6 in den Zeitschlitzen ZS7, ZS8 eine weitere bidirektionale Datenverbindung zu einer anderen Mobilstation unterhält und daß die Mobilstation MS1...MSn, MSn+1...MSn+m in den Zeitschlitzen ZS7, ZS8 durch das "Monitoring" M z.B. auf der zweiten Frequenz f2 einen zweiten Überwachungsmodus für das Weiterreichen von telekommunikationsverbindungsrelevanten Informationen einleitet, um die asymmetrische Datenverbindung bei einer vorgebbaren Maximal-Datenübertragungsrate in Abwärtsrichtung und einer vorgebbaren Minimal-Datenübertragungsrate in Aufwärtsrichtung über die Basisstation BS1, BS2, BS1.1...BS1.6 zu übertragen.

FIGUR 4 zeigt, daß die Mobilstation MS1...MSn, MSn+1...MSn+m in den Zeitschlitzen ZS1...ZS6 mit der Basisstation BS1, BS2, BS1.1...BS1.6 eine bidirektionale asymmetrische Datenverbindung mit den Empfangszeitschlitzen Rx1 und Sendezeitschlitzen Tx1 unterhält, daß die Mobilstation MS1...MSn, MSn+1...MSn+m in den Zeitschlitzen ZS7, ZS8 durch das "Monitoring" M z.B. auf der dritten Frequenz f3 den zweiten Überwachungsmodus für das Weiterreichen von telekommunikationsverbindungsrelevanten Informationen einleitet, um die asymmetrische Datenverbindung bei einer vorgebbaren Maximal-Datenübertragungsrate in Abwärtsrichtung und einer vorgebbaren Minimal-Datenübertragungsrate in Aufwärtsrichtung über die Basisstation BS1, BS2, BS1.1...BS1.6 zu übertragen und daß die Basisstation BS1, BS2, BS1.1...BS1.6. in den Zeitschlitzen ZS7, ZS8 durch das "Monitoring" M z.B. auf der zweiten Frequenz f2 den zweiten Überwachungsmodus für das Weiterreichen von telekommunikationsverbindungsrelevanten Informationen einleitet, um die asymmetrische Datenverbindung bei einer vorgebbaren Maximal-Datenübertragungsrate in Abwärtsrichtung und einer vorgebbaren Minimal-Datenübertragungsrate in Aufwärtsrichtung über die Basisstation BS1, BS2, BS1.1...BS1.6 zu übertragen.

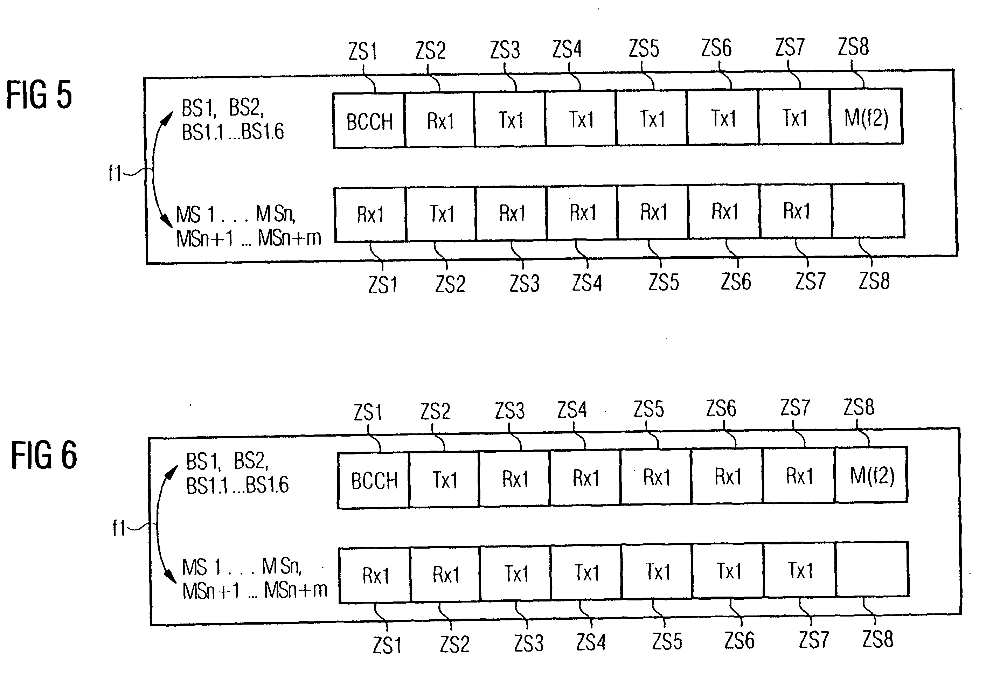

FIGUR 5 zeigt, daß die Mobilstation MS1...MSn, MSn+1...MSn+m in den Zeitschlitzen ZS1...ZS7 mit der Basisstation BS1, BS2, BS1.1...BS1.6 eine bidirektionale asymmetrische Datenverbindung mit den Empfangszeitschlitzen Rx1 und Sendezeitschlitzen Tx1 unterhält und daß die Basisstation BS1, BS2, BS1.1...BS1.6. in dem Zeitschlitz ZS8 durch das "Monitoring" M z.B. auf der zweiten Frequenz f2 den zweiten Überwachungsmodus für das Weiterreichen von telekommunikationsverbindungsrelevanten Informationen einleitet, um die asymmetrische Datenverbindung bei einer vorgebbaren Maximal-Datenübertragungsrate in Abwärtsrichtung und einer vorgebbaren Minimal-Datenübertragungsrate in Aufwärtsrichtung über die Basisstation BS1, BS2, BS1.1...BS1.6 zu übertragen.

FIGUR 6 zeigt, daß die Mobilstation MS1...MSn, MSn+1...MSn+m in den Zeitschlitzen ZS1...ZS7 mit der Basisstation BS1, BS2, BS1.1...BS1.6 eine bidirektionale asymmetrische Datenverbindung mit den Empfangszeitschlitzen Rx1 und Sendezeitschlitzen Tx1 unterhält und daß die Basisstation BS1, BS2, BS1.1...BS1.6. in dem Zeitschlitz ZS8 durch das "Monitoring" M z.B. auf der zweiten Frequenz f2 den zweiten Überwachungsmodus für das Weiterreichen von telekommunikationsverbindungsrelevanten Informationen einleitet, um die asymmetrische Datenverbindung bei einer vorgebbaren Minimal-Datenübertragungsrate in Abwärtsrichtung und einer vorgebbaren Maximal-Datenübertragungsrate in Aufwärtsrichtung über die Basisstation BS1, BS2, BS1.1...BS1.6 zu übertragen.

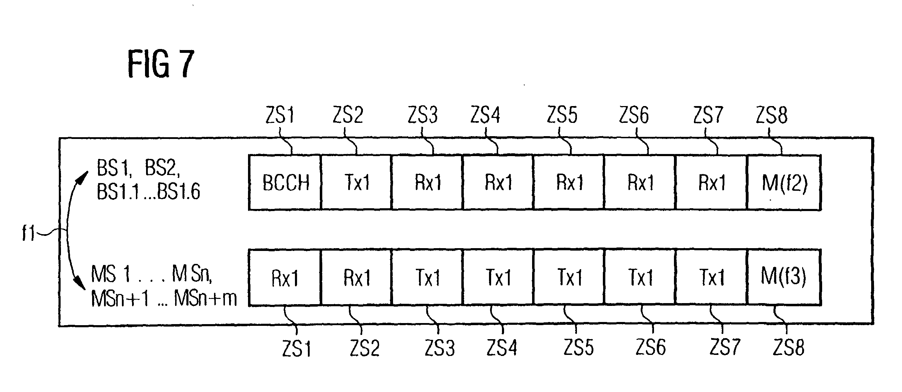

FIGUR 7 zeigt, daß die Mobilstation MS1...MSn, MSn+1...MSn+m in den Zeitschlitzen ZS1...ZS7 mit der Basisstation BS1, BS2, BS1.1...BS1.6 eine bidirektionale asymmetrische Datenverbindung mit den Empfangszeitschlitzen Rx1 und Sendezeitschlitzen Tx1 unterhält, daß die Mobilstation MS1...MSn, MSn+1...MSn+m in dem Zeitschlitz ZS8 durch das "Monitoring" M z.B. auf der dritten Frequenz f3 den zweiten Überwachungsmodus für das Weiterreichen von telekommunikationsverbindungsrelevanten Informationen einleitet, um die asymmetrische Datenverbindung bei einer vorgebbaren Minimal-Datenübertragungsrate in Abwärtsrichtung und einer vorgebbaren Maximal-Datenübertragungsrate in Aufwärtsrichtung über die Basisstation BS1, BS2, BS1.1...BS1.6 zu übertragen und daß die Basisstation BS1, BS2, BS1.1...BS1.6. in dem Zeitschlitz ZS8 durch das "Monitoring" M z.B. auf der zweiten Frequenz f2 den zweiten Überwachungsmodus für das Weiterreichen von telekommunikationsverbindungsrelevanten Informationen einleitet, um die asymmetrische Datenverbindung bei einer vorgebbaren Minimal-Datenübertragungsrate in Abwärtsrichtung und einer vorgebbaren Maximal-Datenübertragungsrate in Aufwärtsrichtung über die Basisstation BS1, BS2, BS1.1...BS1.6 zu übertragen.

## Patentansprüche

1. Verfahren zum Steuern des Weiterreichens von Telekommunikationsverbindungen zwischen Mobilteilen und Basisstationen in zellularen Telekommunikationssystemen mit drahtloser Telekommunikation mit folgenden Merkmalen:
(a) die Telekommunikationsverbindungen werden in einem unkoordinierten unlizensierten Betrieb des Telekommunikationssystems (UMTS) und in einem koordinierten lizensierten Betrieb des Telekommunikationssystems (UMTS) durch die Mobilteile (MS1...MSn, MSn+1...MSn+m) initiiert und durch die Basisstationen (BS1, BS2, BS1.1...BS1.6) gesteuert,
(b) eine den unkoordinierten unlizensierten Systembetrieb unterstützende, einer ersten Zelle (FZ1) zugeordnete erste Basisstation (BS1) empfängt in einem ersten Überwachungsmodus für das Weiterreichen von Telekommunikationsverbindungen relevante Nachrichten, die von mindestens einer zu der ersten Basisstation (BS1) benachbarten, einen koordinierten lizensierten Systembetrieb oder den unkoordinierten unlizensierten Systembetrieb unterstützenden, jeweils einer zweiten Zelle zugeordneten zweiten Basisstation (BS2, BS1.1...BS1.6) jeweils auf einem als "Broadcast Control CHannel (BCCH)" ausgebildeten ersten Telekommunikationskanal gesendet werden,
(c) die erste Basisstation (BS1) bewertet die empfangenen Nachrichten bezüglich Informationsgehalt und Empfangsqualität und überträgt eine nach Empfangsqualität geordnete Liste von für die Übergabe der Telekommunikationsverbindung notwendigen Parametern, die jeweils einer der zweiten Basisstationen (BS2, BS1.1...BS1.6) zuzuordnen sind, auf einem als "Broadcast Control CHannel (BCCH)" ausgebildeten zweiten Telekommunikationskanal an sich in der ersten Zelle (FZ1) aufhaltende erste Mobilteile (MS1...MSn).

2. Verfahren nach Anspruch 1, **dadurch gekennzeichnet, daß**
der erste Überwachungsmodus beginnend mit dem Einschalten der ersten Basisstation (BS1) in vorgegebenen periodischen Zeitabständen eingeschaltet wird.

3. Verfahren nach Anspruch 1 oder 2, **dadurch gekennzeichnet, daß**
ein zweiter Überwachungsmodus für das Weiterreichen von telekommunikationsverbindungsrelevanten Informationen in dem Mobilteil (MS1...MSn, MSn+1...MSn+m) und/oder in der Basisstation (BS1, BS2, BS1.1...BS1.6) eingeleitet wird, um asymmetrische Datenverbindungen bei einer vorgebbaren Maximal-Datenübertragungsrate in Abwärtsrichtung und einer vorgebbaren Minimal-Datenübertragungsrate in Aufwärtsrichtung über die Basisstation (BS1, BS2, BS1.1...BS1.6) zu übertragen.

4. Verfahren nach einem Ansprüche 1 bis 3, **dadurch gekennzeichnet, daß**
ein zweiter Überwachungsmodus für das Weiterreichen von telekommunikationsverbindungsrelevanten Informationen in der Basisstation (BS1, BS2, BS1.1...BS1.6) eingeleitet wird, um asymmetrische Datenverbindungen bei einer vorgebbaren Minimal-Datenübertragungsrate in Abwärtsrichtung und einer vorgebbaren Maximal-Datenübertragungsrate in Aufwärtsrichtung über die Basisstation (BS1, BS2, BS1.1...BS1.6) zu übertragen.

5. Verfahren nach einem der Ansprüche 1 bis 4, **dadurch gekennzeichnet, daß**
die drahtlose Telekommunikation nach der CDMA-, FDMA-, und/oder TDMA-Zugriffsmethode und nach dem TDD- und/oder FDD-Prinzip durchgeführt wird.

## Claims

1. Method for controlling the handover of telecommunications connections between mobile parts and base stations in cellular telecommunications systems using wireless telecommunication with the following features:
(a) the telecommunications connections are initiated by the mobile parts (MS1...MSn, MSn+1...MSn+m) and controlled by the base stations (BS1, BS2, BS1.1...BS1.6) in an uncoordinated, unlicensed mode of operation of the telecommunications system (UMTS) and in a coordinated, licensed mode of operation of the telecommunications system (UMTS),
(b) a first base station (BS1) which supports the uncoordinated, unlicensed mode of system operation and is assigned to a first cell (FZ1) receives, in a first monitoring mode, messages which are relevant for the handing over of telecommunications and are in each case transmitted by at least one second base station (BS2, BS1.1...BS1.6) which is adjacent to the first base station (BS1), supports a coordinated, licensed mode of system operation or the uncoordinated, unlicensed mode of system operation, and is in each case assigned to a second cell, on a first telecommunications channel embodied as a Broadcast Control CHannel (BCCH),
(c) the first base station (BS1) evaluates the received messages in terms of information content and reception quality and transmits a list, sorted by reception quality, of parameters which are required for the handing over of telecommunications connections and which are each to be assigned to one of the second base stations (BS2, BS1.1...BS1.6) on a second telecommunications channel embodied as a Broadcast Control CHannel (BCCH) to first mobile parts (MS1...MSn) which are located in the first cell (FZ1).

2. Method according to claim 1, **characterized in that** the first monitoring mode is switched on at predetermined periodic time intervals, starting with the switching on of the first base station (BS1).

3. Method according to claim 1 or 2, **characterized in that** a second monitoring mode for the handing over of information which is relevant for telecommunications connections is initiated in the mobile part (MS1...MSn, MSn+1...MSn+m) and/or in the base station (BS1, BS2, BS1.1...BS1.6) in order to transmit asymmetric data links via the base station (BS1, BS2, BS1.1...BS1.6) at a predeterminable maximum data transmission rate in the downlink direction and a predeterminable minimum data transmission rate in the uplink direction.

4. Method according to one of claims 1 to 3, **characterized in that** a second monitoring mode for the handing over of information which is relevant to telecommunications connections is initiated in the base station (BS1, BS2, BS1.1...BS1.6) in order to transmit asymmetric data links via the base station (BS1, BS2, BS1.1...BS1.6) at a predeterminable minimum data transmission rate in the downlink direction and a predeterminable maximum data transmission rate in the uplink direction.

5. Method according to one of claims 1 to 4, **characterized in that** the wireless telecommunication is performed in accordance with the CDMA, FDMA and/or TDMA access method and in accordance with the TDD and/or FDD principle.

## Revendications

1. Procédé pour la commande de la retransmission de liaisons télécommunication entre des parties mobiles et des stations de base dans des systèmes de télécommunication cellulaires sans fil, comportant les caractéristiques suivantes:
(a) les liaisons de télécommunication sont initialisées par les parties mobiles (MS1 ... MSn, MSn+1 ... MSn+m) dans un mode du système de télécommunication (UMTS) non coordonné et non licencié et dans un mode du système de télécommunication (UMTS) coordonné et licencié et sont commandées par les stations de base (BS1, BS2, BS1.1 ... BS1.6);
(b) une première station de base (BS1) qui assiste le mode de système non coordonné et non licencié et est associée à une première cellule (FZ1) reçoit, dans un premier mode de surveillance, des messages pertinents pour la retransmission de télécommunications, lesquels sont émis respectivement sur un premier canal de télécommunication réalisé sous la forme d'un «Broadcast Control Channel (BCCH)» par au moins une deuxième station de base (BS2, BS1.1 ... BS1.6) voisine de la première station de base (BS1), laquelle assiste un mode de système coordonné et licencié ou le mode de système non coordonné et non licencié et est respectivement associée à une deuxième cellule;
(c) la première station de base (BS1) évalue les messages reçus pour ce qui est du contenu de l'information et de la qualité de la réception et transmet une liste, ordonnée selon la qualité de la réception, de paramètres nécessaires pour la transmission de la liaison de télécommunication, lesquels doivent respectivement être associés à l'une des deuxièmes stations de base (BS2, BS1.1 ... BS1.6), sur un deuxième canal de télécommunication réalisé sous la forme d'un «Broadcast Control CHannel (BCCH)» à des premières parties mobiles (MS1 ... MSn) qui se trouvent dans la première cellule (FZ1).

2. Procédé selon la revendication 1, **caractérisé en ce que** le premier mode de surveillance est mis en marche à des intervalles de temps périodiques donnés en commençant par la mise en marche de la première station de base (BS1).

3. Procédé selon la revendication 1 ou 2, **caractérisé en ce qu'**un deuxième mode de surveillance est initialisé pour la retransmission d'informations pertinentes à l'égard de liaisons de télécommunication dans la partie mobile (MS1 ... MSn, MSn+1 ... MSn+m) et/ou dans la station de base (BS1, BS2, BS1.1 ... BS1.6) pour transmettre des liaisons de données asymétriques avec un débit de transmission de données maximal prédéterminable dans le sens descendant et un débit de transmission minimal prédéterminable dans le sens montant par l'intermédiaire de la station de base (BS1, BS2, BS1.1 ... BS1.6).

4. Procédé selon l'une des revendications 1 à 3, **caractérisé en ce qu'**un deuxième mode de surveillance est initialisé pour la retransmission d'informations pertinentes à l'égard de liaisons de télécommunication dans la station de base (BS1, BS2, BS1.1 ... BS1.6) pour transmettre des liaisons de données asymétriques avec un débit de transmission de données minimal prédéterminable dans le sens descendant et un débit de transmission maximal prédéterminable dans le sens montant par l'intermédiaire de la station de base (BS1, BS2, BS1.1 ... BS1.6).

5. Procédé selon l'une des revendications 1 à 4, **caractérisé en ce que** la télécommunication sans fil est exécutée selon la méthode d'accès CDMA, FDMA et/ou TDMA et selon le principe du TDD et/ou FDD.
